# EUROPÄISCHE PATENTANMELDUNG

(11) **EP 1 708 504 A2**
(43) Veröffentlichungstag der Anmeldung: **04.10.2006**
(21) Anmeldenummer: 06112053.1
(22) Anmeldetag: 31.03.2006
(51) Int. Cl.: H04N 7/00, H04N 7/16, A63J 23/02

(54) **Verfahren und Einrichtung zur zentralen Organisation der Präsentation digitalisierter Werbefilmsequenzen**

(30) Priorität: 01.04.2005 DE 102005014990
(71) Anmelder: Kummeth, Richard, 82418 Murnau (DE)
(72) Erfinder: Kummeth, Richard, 82418 Murnau (DE)
(74) Vertreter: Neidl-Stippler, Cornelia

(57) **Zusammenfassung**

Die Erfindung betrifft ein Verfahren und eine Vorrichtung zur zentralen Organisation der Vorstellung digitalisierter Werbefilme in Kinosälen, die zur Wiedergabe digitaler Werbefilme ausgerüstet sind, mit: Abspeichern von Zielgruppencodes zu Filmtiteln in einem Filmbewertungsdatenlieferanten (12); Erstellen von Medienwirksamkeitscodes, die einzelnen Zielgruppen zugeordnet werden, durch einen den Erfolg des Films berücksichtigenden Zielgruppendaten-Lieferanten (14); Abspeichern einer Gebührenordnung im Gebührenlieferanten (15); Übermitteln der so erstellten Codes und der Verknüpfungen mit Filrntiteln und an einen zentralen Werbeverteiler (10), Beauftragung von Werbung gemäss Zielgruppencodes, Werbefrequenzdaten und ggf. Budgetierungsdaten durch einen Kunden (16); Erstellen mindestens einer individuellen Playlist anhand der Informationen der Lieferanten und Codes durch den zentralen Werbeverteiler (10) für den Kunden (16); Übermitteln der Playlist an mindestens einen Kinosaal (18) und dementsprechendes Abspielen der Werbefilme; ggf. Übermitteln der abgespielten Playlists von den Kinosälen (18) an den zentralen Werbeverteiler (10) und Erstellen einer Gebührenrechnung anhand der gespielten Playlists für den Kunden (16).

## Beschreibung

Die Erfindung betrifft ein Verfahren und eine Einrichtung zu zentralen Organisation der Präsentation von digitalisierten Werbefilmsequenzen oder Standbildern in Kinosälen, die mit einer digitalen Präsentationsmöglichkeit ausgestattet sind.

Bislang werden digitale Werbefilme und Werbebilder - die im folgenden gemeinsam als Werbefilm bezeichnet werden, gemäss einer von qualifizierten Fachleuten erstellten Playlist an einzelner Kinos verschickt und dort beispielsweise mit einem digitalen Projektor vorgeführt, wobei die Werbung anhand der jeweils abgespielten Werbefilme abgerechnet wird. Derartige Systeme sind beispielsweise in der EP 1206879 B1 beschrieben.

Nachfolgend wird unter "Kinosaal" ein Aufführungsort für digitale Videoprojektion verstanden - wie ein mit einem digitalen Videoprojektor und einer Projektionsleinwand ausgerüsteter Raum, aber auch eine nicht geschlossene Räumlichkeit (beispielsweise Ein Flugzeug oder anderes Verkehrsmittel oder ein Wartesaal), wie ein aussenliegendes LED oder LCD-Display sein, welche Filme wiedergibt; unter "Kino" ein Ort, der ein oder mehrere Kinosäle enthält (Multiplex-Kino) und mindestens einen lokalen zentralen Kinoserver aufweisen kann, der Werbefilme entsprechend abgespeicherter Kinosaalplaylisten individualisiert an die einzelnen Kinosäle übermittelt. Unter "zentraler Werbeverteiler" wird eine Rechnereinheit mit einem darin abgespeicherten Playlisterstellunngsprogramm und Übermittlungseinrichtungen, wie Sender und Empfänger für Daten von Aussen und mindestens einem Kundenzugang verstanden.

Unter "Lieferant" werden Datenverarbeitungseinrichtungen mit Speichereinrichtungen und Übermittlungsfunktionen verstanden, die eine extern aktualisierbare Datenbank mit abgespeicherten werberelevanten Codes und/oder ein Kostenverzeichnis beinhalten, deren Daten vom zentralen Werbeverteiler abgefragt werden können. Unter "Werbekunde" werden sowohl Werbeagenturzugänge, welche Playlists versenden und empfangen können, als auch Direktkundenzugänge, wie von Firmen verstanden, welche bidirektionale Kommunikation durchführen können.

Bisher funktioniert die Vorführung von Werbefilmen nach dem Schema, dass ein Kunde, also ein Anbieter von Waren oder Dienstleistungen, die Präsentation seines Werbefilms in einem Kino auf einer bestimmten Leinwand zu einer vorherbestimmten Zeit bucht. Der Werbefilm wird dann von einer Zentrale mit anderen Werbefilms für die Vorführung in einem speziellen Kino kombiniert und dem Kino digital überspielt. Dadurch können die einzelnen Sequenzen bereits kurzfristig an einen möglicherweise wechselnden Werbebedarf (Sonderverkaufsaktionen, neue Artikel etc) angepaßt werden.

Beim bekannten System ist somit immer eine erhebliche Arbeit durch Personen bei der Zusammenstellung der Werbefilmsequenzen notwendig, die auch Fehlermöglichkeiten und erhöhten Zeitaufwand mit sich birgt. Bisher wird Werbung lokal und zeitlich gebucht - d.h. es wird Werbung aufgrund gesetzlicher Vorgaben oder aufgrund der freiwilligen Selbstkontrolle insbesondere für die Zigaretten- und Alkoholwerbung gesendet. Falls lokal Werbung betrieben werden soll, ist eine Auswahl der Leinwände aufgrund der geographischen Lage möglich. Heute ist es allerdings mehr denn je notwendig, die Werbung einfach und sehr schnell sehr spezifisch für bestimmte Zuschauerkreise abzuspielen, da aufgrund des ständig steigenden Kostendrucks und der Werbeüberlastung der Kunden kosteneffizient und wirksam geworben werden muss. Die bisherige Werbung war in dieser Hinsicht nicht zufrieden stellend und die Zusammenstellung individualisierter Werbeblöcke für einzelne Kinosäle war zu kostenaufwendig.

Das bekannte System ist insofern verbesserungsfähig, als es hinsichtlich der Zielgruppen und Medienwirksamkeit noch in hohem Umfang aufwendig menschliche Arbeitszeit bei der Zusammenstellung der Playlists erfordert. Es ist nicht möglich, automatisch kurzfristig zu berücksichtigen, ob aufgrund des Filmthemas besonders erwünschte Zielgruppen erreicht werden oder eine besonders hohe Zuschauerzahl aufgrund neuer Parameter, wie aktuellen Marktforschungsdaten (beispielsweise Aus Daten, die im Ausland erhoben wurden oder aus aktuellen Inlandsdaten) oder sonstigen neuen Gegebenheiten, wie neuere Budgetierungsvorgaben, zu erwarten ist. Schliesslich ist die Erstellung einzelner Preisvorschläge für bestimmte Werbeprofile inakzeptabel aufwendig, da nunmehr ein Trend zu kleinen Kinosälen besteht in denen nur vergleichsweise wenig "Werbekunden" erreichbar sind - für derartige kleine Einheiten ist eine individuelle Erstellung von Playlists bisher zu aufwendig.

Auch bei unerwartet erfolgreichen Filmen ist es bisher nicht möglich, dies kurzfristig zu berücksichtigen und die Werbung speziell schnell für diese Filme zu buchen, um so erhöhte Zuschauerzahlen zu erreichen. Auch eine entsprechende Anpassung der Preise für die Werbung ist nicht vorgesehen.

Es ist aber besonders erwünscht, zielgruppengenau zu werben und abzurechnen, insbesondere hinsichtlich Vorstellungen und Filmen, die besonders stark besucht sind. Dies ist vom Film und dessen Akzeptanz bei den Zuschauern abhängig, was bisher nicht berücksichtigt wird. Bei einigen Filmen stellt sich erst während der Laufzeit heraus, dass es sich um Kultfilme oder besonders erfolgreiche Streifen handelt, sodass Werbung vor diesen Filmen auch zu sonst unattraktiven Zeiten oder Konditionen sinnvoll und angeraten sein kann.

Es ist daher Aufgabe der Erfindung, ein Verfahren und eine Einrichtung zu seiner Durchführung zu schaffen, welche einfacher und schneller zielgruppengenaue Werbung durch Werbefilme ermöglicht.

Diese Aufgabe wird durch das Verfahren nach Anspruch 1 gelöst. Ferner bezieht sich die Erfindung auch auf eine Einrichtung zur Durchführung des Verfahrens. Vorteilhafte Weiterbildungen ergeben sich aus den abhängigen Ansprüchen.

Ausgehend von digitalisierten (Werbe)Filmen, Filmsequenzen oder Standbildern sowie von Daten über den Film sowie über dessen Akzeptanz bietet das erfindungsgemäße Verfahren, das sich eines zentralen Rechners - zentralen Werbeverteilers, der durch Lieferanten ständig mit neuen Zuschauerzahlen und Filmbeurteilungskriterien aktualisiert wird - bedient, für die Darbietung von Werbefilms eine Vielzahl von Vorteilen.

Nachfolgend wird die Erfindung anhand von Kinosälen mit digitalen Videoprojektoren erläutert, selbstverständlich ist dem Fachmann offensichtlich, dass diese jederzeit durch äquivalente Einrichtungen, wie LCDs, LEDs oder sonstige extern ansteuerbare Wiedergabeeinrichtungen. Diese sollen ebenfalls im Schutzbereich eingeschlossen sein.

Über die Erfindung ist eine optimale Kontrolle des Werbekunden über die Anzahl der Ausstrahlungen und somit eine leistungsgerechte Abrechnung gegenüber dem Auftraggeber gewährleistet.

Ein Vorteil ist die automatisch erzielte hohe Zielgruppengenauigkeit der Präsentation der einzelnen Werbefilme. So ist es durch den zentralen Werbeverteiler, der aktualisierte zielgruppenspezifische Kriterien der Hauptfilme erhält, möglich, die Inhalte der Films, beispielsweise die Preise von Artikeln, innerhalb kürzester Zeit nach Bedarf automatisch anzupassen, somit verkürzt sich die Vorlaufzeit für die Werbung bei erhöhter Zielgruppenspezifität und vermindertem Verarbeitungsaufwand. Auch die für einzelne Kinos individuell zusammengestellten Werbeblöcke werden durch den zentralen Werbeverteiler anhand der von Lieferanten zugelieferten Daten anhand eines Programms erstellt, so daß die Qualität und Zielgruppenorientiertheit aller Werbeblöcke jederzeit gewährleistet ist. Es können dabei die Werbefilms global auftretender Firmen individuell mit den Films lokal ansässiger Geschäfte gleicher Zielgruppe kombiniert und auch Akzeptanzdaten und so der gesamte Werbeblock ständig verändert werden. Die Werbefilmabspielen kann erhobenen Marktforschungsdaten über die Akzeptanz des Films sowie Bewertungskriterien über den Film und damit dem Publikumsbedarf optimal angepasst werden, was zu einer hohen Wirksamkeit und Aktualität der Werbung führt. Die Übertragung der Werbefilmsequenzen erfolgt in vorteilhafter Weise über ein Datenleitungsnetz (Kabel, Funk oder Satellit) von einer Zentrale zu den einzelnen Filmtheatern so dass ein gesendeter Werbefilm von allen Kinos, auch gleichzeitig, empfangen werden kann, oder aber nur von ausgewählten Kinos.

Ein grundlegender Gedanke des zentralen Werbeverteilers ist, daß jedem der angeschlossenen Kinosäle eine Playlist, wie ein Spielplan, die automatisch vom zentralen Werbevertreter zugeordnet wird, auf der die Abfolge der einzelnen Werbefilmsequenzen und deren Zuordnung zu dem Saal entsprechend einer individualisierten Datenmenge, die Filme und deren bestimmten Bewertungskriterien berücksichtigt. Diese Playlist ist eine Datei, in der beispielsweise das Kino, das Spieldatum, die Uhrzeit und dann die Playliste der Filme mit Verweisen auf den tatsächlichen Speicherplatz der entsprechenden Daten gespeichert ist. Die Playlisten vieler Kinos können in dem zentralen Werbeverteiler niedergelegt und von diesem abgearbeitet werden. Der zentrale Werbeverteiler hat somit jederzeit die vollständige Kontrolle über den Ablauf der Werbefilme und kann eine genaue Dokumentation betreiben. Über die Kontrolle durch die Playlists kann zielgruppenungeeignete Werbung, beispielsweise Zigarettenwerbung in Zeichentrickfilmen, unterbunden werden. Gleichzeitig kann für jede Playlist ein Kostenvorschlag erstellt werden bzw. Kostenvorgaben des Werbekunden berücksichtigt werden.

Für die Ausführung der Playlisten, d.h. für die Übertragung der Filme zu den dezentral in den Kinos befindlichen Videoprojektoren und damit zur Vorführung, gibt es verschiedene Möglichkeiten. So kann die Versorgung der Videoprojektoren direkt vom zentralen Werbeverteiler vorgenommen werden. Dazu werden die digitalen Daten vom zentralen Werbeverteiler an den jeweiligen digitalen Projektor übertragen und dieser setzt sie aktuell in Bilder um.

Eine andere Möglichkeit bedient sich dezentral in den Kinos aufgestellter Rechner, die zur Steuerung der Videoprojektoren eingesetzt werden. Dabei müssen nur fertige Playlisten vom zentralen Werbeverteiler an die dezentralen Rechner übertragen werden, die dann die Playlisten abarbeiten. Die dazugehörigen Werbefilme können schon vorher auf den dezentralen Rechner übertragen worden sein, bzw. diesem zur Verfügung stehen, oder er ruft sie bei Bedarf vom zentralen Rechner ab. Die zentrale Organisation kann einzelnen Kinos eine größere Flexibilität und Eigenständigkeit bieten. Die digitale Informationsübertragung vom zentralen Werbeverteiler auf die Kinorechner erfolgt dabei über Datennetze via Leitung oder Satellit. Wegen der Datensicherheit ist es vorteilhaft, die Daten bei der Übertragung zu kodieren.

Kinofilme oder andere immer wiederkehrende Filmsequenzen können den dezentralen Rechnern aber auch auf CD-Roms zur Verfügung gestellt werden, was ebenfalls eine erhöhte Datensicherheit gewährleisten kann.

Es kann vorteilhaft sein, vorhandene Sendestationen als Zwischenstationen zu verwenden. Solche Sendestationen sind von Radio- und Fernsehsendern bekannt und verfügen über die nötigen Anlagen - dadurch besteht auch die Möglichkeit, Kino- und Fernsehwerbung anhand der Zielgruppenspezifität gleichzeitig zu steuern. Den Sendestationen werden die Playlisten und die Werbefilme vorteilhafterweise ebenfalls via Datenleitung übermittelt. Zwischen dem zentralen 'Werbeverteiler und dem dezentralen Rechner können weitere Datenverarbeitungs- und Übertragungsstationen zwischengeschaltet werden.

Die Playlisten können separat von einer eigens dafür vorgesehenen Agentur erstellt werden, die im direkten Kontakt zum Auftraggeber für die Werbung steht oder aber vom Auftraggeber überarbeitet werden. Es kann auch vorgesehen werden, die Playlisten automatisch durch den zentralen Werbeverteiler zumindest teilweise - in Art eines Vorschlags - erstellen zu lassen und so Aufwand bei der Erstellung einzusparen. Die Playlisten werden dem Zentralen Werbeverteiler übermittelt.
Ein wesentlicher Teil der erfindungsgemäßen Einrichtung und des Verfahrens sind die Lieferanten. Diese sind Speicheranordnungen, in denen ein ständig aktualisierter Datenfluss werberelevante Informationen ablegt, die dann in die automatisierte Erstellung der Playlisten durch den Werbeverteiler eingehen. Ein derartiger Lieferant kann ein Filmbewertungsdatenlieferant oder Datenbank sein, in dem Filme entsprechend Bewertungscodes klassifiziert sind - also zu Filmtiteln Codes abgelegt sind. Derartige Bewertungscodes können bspw. Zuschauermerkmale wie Alter, Finanzkraft, Interessengebiet, Ausbüdungsstand, Naturliebhaber, Automobile, Reisen.... Umfassen, die aufgrund des Filmthemas für jeden verfügbaren Film nach einem vorabgespeicherten Bewertungsschlüssel vergeben werden. Diese Daten können aufgrund von erhobenen Umfrageergebnissen ständig aktualisiert werden (aktuelle Zuschauerdaten, Erfolg im Ausland etc.).Typische, keinesfalls einschränkende Beispiele sind: Zeichentrickfilmen können Kinder, Altersgrenze, Eltern.... Zugeordnet werden, Kulturfilme gehobenen Kreisen, guter Ausbildung, Schüleralter, Reise- und Abenteuerfilmen können Reiseinteressierte, eigenes Einkommen, Abenteuerfilmen Reiseinteressierte, Sportinteressierte zugeordnet werden. Diese Bewertungsschlüssel werden dem zentralen Werbeverteiler 10 auf dessen Anfrage hin von dem Filmbewertungsdaten-Lieferanten 12 übermittelt.

Ein Zielgbruppenakzeptanzlieferant kann aktualisierte Marktforschungsdaten über aktuelles Verbraucherverhalten (Jugendliche haben neue Trendsportart, Esotherik, langlebige Verbrauchsgüter) und/oder regionale gesetzliche Vorgaben (keine Zigarettenwerbung im deutschsprachigen Bereich von Italien oder Verbot von Alkoholwerbung) umfassen.

Lieferanten zeichnen sich dadurch aus, dass sie nur unidirektional an den zentralen Werbeverteiler liefern - d.h. darin abgespeicherte Daten können vom Werbeverteiler nicht verändert werden.

Schliesslich ist noch mindestens ein Kundenzugang vorhanden, welcher Kundeneingaben aufnimmt und Playlisten (beispielsweise Als Vorschlag) mit entsprechenden Kosteninformationen senden kann. Dieser Zugang ist multidirektional d.h. es ist über ihn Zugriff möglich und es werden Daten rückübermittelt.

Eine Ausführungsform des erfindungsgemäßen Verfahrens wird anhand des in der Figur gezeigten Schaubildes nachfolgend erläutert.

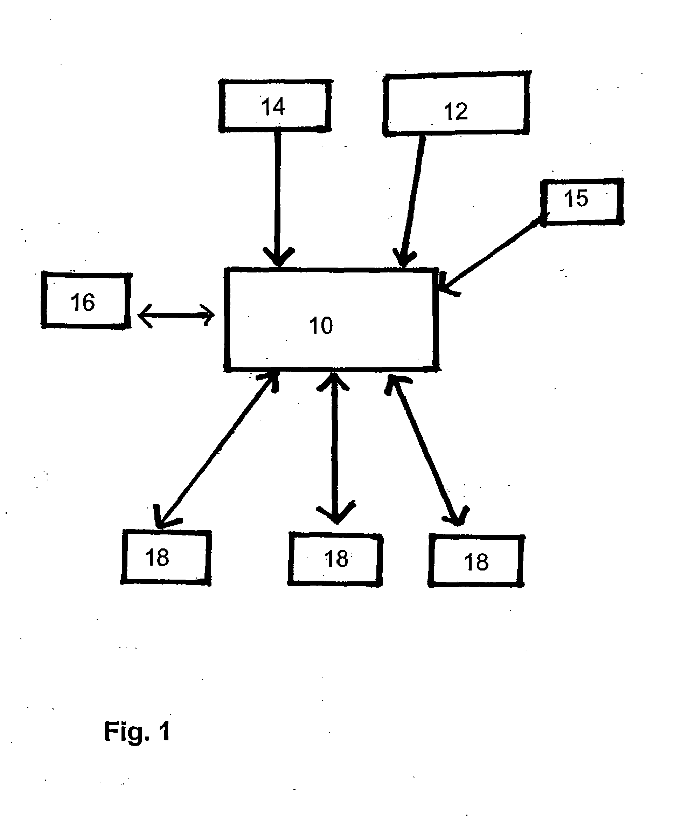

Die Figur 1 zeigt schematisch eine erfindungsgemässe Einrichtung, bei der ein zentraler Werbeverteiler 10 Daten von Lieferanten 12, 14, 15 erhält. Der Werbeverteiler 10 ist ein bevorzugt ein Rechner, der zur Durchführung eines darin abgelegten Werbeverteilungsprogramms befähigt ist, das Werbefilme von Kunden mit Zielgruppencodes Hauptfilmen im wesentlichen ähnlicher Zielgruppencodes zuordnet. Ferner ist das Werbeverteilungsprogramm des Werbeverteilers dazu befähigt, Ortsvorgaben/'Regionen, Zuschauerzahlen und Kostendaten, die jeweils in speziellen Lieferantendatenbanken abgelegt sind, bei der Erstellung der Playlisten zu berücksichtigen. Aufgrund der von den Lieferanten abgefragten Auswahlkriterien wird sodann mindestens eine Playliste erstellt, die gleich abgespielt oder aber zur Freigabe durch den Kunden 16 an diesen übermittelt werden kann. Dazu liefert das Werbeverteilungsprogramm eine Eingabemaske für den Kunden, der seine Werbewünsche - bevorzugt unter Menüführung für typische Werbesituationen, eingeben kann. Der Filmbewertungsdaten-Lieferant 12 ist hier eine Datenbank, die Filmtitel gemeinsam mit mindestens einem zielgruppenspezifischen Code abspeichert - beispielsweise für Zielgruppenthemata wie Natur, Technik, Abenteuer, Kultur, Alter der Zielgruppe, Jugendeignung. Die Datenfilmbewertung würde für einen Sport-Naturfilm, wie einen Skifilm, beispielsweise Codes für Naturliebhaber, Sportartikelverbraucher, Sport-Interessierte, Reise-Interessierte, Wintersportler, Jugendeignung vergeben. Die Codes für (Haupt)filme sind auch im zentralen Werbeverteiler 10 hinterlegt und können im Menü des Werbeverteilerprogramms bspw. als Farben, Ziffern, Stichwörter etc. eingesehen werden. Die Daten im Filmbewertungsdatenlieferanten 12 können direkt vom Filmproduzenten geliefert oder aber von Fachleuten erstellt werden. Ein weiterer Lieferant kann ein Zielgruppenakzeptanz-Lieferant 14 sein, der aktuelle Daten über die Medienwirksamkeit des Films - Zuschauerzahlen, bevorzugte Besuchszeiten, ggf. Alter der Zuschauer und Interessengebiete der Zuschauer - je nachdem, welche Zahlen gerade verfügbar sind, mit dem Filmtitel speichert. Weiterhin kann eine Gebührendatenbank 15 als Lieferant vorhanden sein, die Budgetierungsdaten für Werbung sowie einen zeitlichen Rahmen (hohe oder geringe Werbefrequenz), geographische Ziele der Werbung für lokale Auftraggeber in Verknüpfung mit Gebühren liefern kann.

Der zentrale Werbeverteiler 10 verarbeitet mit dem Werbeverteilerprogramm die Eingaben der verschiedenen Lieferanten 12,14,15 und entwickelt entsprechend einem von einem Kunden 16 - bevorzugt menügesteuert - übermittelten Anforderungsprofil, das dieser anhand einer vorgefertigten Auswahlliste erstellt, Playlistenvorschläge, bevorzugt mit Kostenplänen, die den Kunden 16 übermittelt oder von diesen eingesehen und überarbeitet werden können. Der zentrale Werbeverteiler 10 kann anhand der Filmzuordnungscodes automatisch filmspezifische Playlisten erarbeiten, die durch die ständig aktualisierten Daten, bspw. des Zielgruppenakzeptanz-Lieferanten 14 überarbeitet werden können sowie entsprechend durch den mindestens einen Kunden 16 eingesehen und ggf. aktualisiert werden können.

Nach Freigabe der Werbung steuert der zentrale Werbeverteiler 10 oder mit ihm in Verbindung stehende Kinoserver die Projektion der Werbefilme gemäss Playlist auf den jeweiligen Kinoleinwänden, insbesondere mindestens einen angeschlossenen digitalen Videoprojektor. Die abgespielte Playlist kann dann als Abspielbestätigung an den zentralen Werbeverteiler 10 rückübermittelt werden und anhand derselben eine detaillierte Abrechnung gemäss tatsächlicher Werbung erfolgen.

Im zentraler Werbeverteiler 10 werden in diesem Ausführungsbeispiel die den einzelnen Kinosälen 18 zugeordneten Playlisten als digitale Dateien erstellt, die Hinweise auf eine Abfolge von Filmsequenzen enthalten, wobei als Hinweise Verweise auf den Filmen zugeordnete Datensätze oder auch vollständige Filmsequenzen zu verstehen sind. Die Playlisten beinhalten somit entweder einen Verweis auf den Speicherplatz der vollständigen Information oder die vollständige information selbst. Diese Playlisten sind zunächst für mehrere Kinosäle 18 auf dem zentralen Werbeverteiler 10 gespeichert.

Die Wiedergabe der digitalen Information im einzelnen Kino erfolgt dann derart, dass der Ablauf der Filmsequenzen, insbesondere der Werbefilms, auf dem Videoprojektor des jeweiligen Kinosaals 18 vom zentralen Werbeverteiler 10 gesteuert wird

Über das erfindungsgemäße Verfahren ist es auch möglich, anhand der Playlisten festzustellen, ob der Werbefilm tatsächlich abgespielt wurde und die Abrechnung kann ggf. überprüft und angepasst werden. Es ist z.B. üblich, weniger populäre Filme oder einen Film nach einer bestimmten Laufdauer in einem kleineren Kinosaal des gleichen Kinos aufgrund geringerer Besucherzahlen abzuspielen, wodurch dann weniger Werbeempfänger erreicht werden. Auch derartigen Anpassungen kann nun Rechnung getragen werden.

Die Organisation, d.h. die Erstellung und die Anfertigung der Filmsequenzen anhand der Playlisten erfolgt im zentraler Werbeverteiler 10, die über eine Datenleitung in direkter Verbindung mit dem Kino steht. Über diese Datenleitung kann das Kinosaal 18 auch eine Rückmeldung der ausgestrahlten Filme übermitteln. Somit ist eine Kontrolle der Vorführung und damit eine leistungsgerechte Abrechnung gegenüber den Werbekunden 16 garantiert. Im vorliegenden Ausführungsbeispiel werden die reinen Playlisten vom zentralen Werbeverteiler 10 erstellt.

Beim erfindungsgemäßen Verfahren finden folgende Schritte statt:
Erstellen und Abspeichern von Zielgruppencodes zu Filmtiteln durch einen Lieferanten 12;
Erstellen von Werbung mit Zielgruppencodes durch einen Kunden 16,
Erstellen von Zielgruppendatencodes, die einzelnen Zielgruppen zugeordnet werden, durch einen den Erfolg des Films berücksichtigenden Zielgruppendaten-Lieferanten 14;
Übermitteln der so erstellten Zielgruppencodes und der Verknüpfungen mit Filmtiteln und an einen zentralen Werbeverteiler 10,
Liefern von Spielplänen und gespielten Playlists von den Kinosälen 18 an den zentralen Werbeverteiler 10,
Erstellen mindestens einer individuellen Playlist anhand der Codes durch den zentralen Werbeverteiler 10;
Übermitteln der Playlist an den Kunden 16 und an die Kinosaale 18.

Es wird jedem Film ein einfaches Codierungsschema zugeordnet, anhand dessen er Zielgruppen zugeordnet wird. Aufgrund der Zielgruppencodierung mit dem gleichen Codierungsschema ist es dann möglich, die Werbung zielgruppengerecht zu plazieren. Die Codierung wird den Kunden in einem Auswahlmenü oder einer Auswahlliste zur Verfügung gestellt, anhand derer der Kunde dann die Werbung buchen kann. Anhand des Buchungsauftrags/Buchungsanfrage kann dann sogleich ein Kostenvoranschlag für verschiedene, ggf. vorgeschlagene oder auswählbare Werbestrategien (hohe Werbefrequenz oder niedrige Werbefrequenz, zeitlich kurze Werbung für Sonderaktionen oder eine Dauerwerbung, um dem Kunden in Erinnerung zu bleiben, wie Zigarettenwerbung und sonstige Markenwerbung, regional oder überregional oder lokal) übermittelt werden und auch eine vom Kunden gesetzte Budgetierung berücksichtigt werden. Im übrigen können auch Besonderheiten der Werbung (Beschränkung auf ein besonderes Gebiet, auf eine bestimmte Sprachgruppe, auf eine bestimmte Zeit, bestimmte Wochentage etc.) entsprechend berücksichtigt werden. Dadurch, dass nun den Hauptfilmen selbst Zielgruppencodes zugeordnet werden und den Werbeagenturen oder Werbekunden die Möglichkeit gegeben wird, anhand dieser Zielgruppencodes zu buchen, ist eine erheblich spezifischere und sicherere Werbung möglich, als bisher. Die Zielgruppencodes können Kunden in Form eines einfachen Menüs, in dem beispielsweise Die Codes in Form von Farben oder einfachen Symbolen verschlüsselt werden, übermittelt werden.

Letzteres hat den Vorteil, dass auch der Sprache Unkundige leichter buchen können und die Darstellungen übersichtlicher werden.. In ähnlicher Weise können Budgetierungseingaben, Werbefrequenzeingaben und lokale Zuordnungen (Landkartendisplay) erstellt werden. Der zentrale Werbeverteiler 10 erstellt anhand eines Auswahlprogramms, welches die Kundeneingabe mit den Codes der Lieferanten 13 und 12 kombiniert, Playlistenvorschläge und kann diese - ggf. nach Freigabe durch den Kunden, ausserordentlich schnell verwirklichen oder aktualisieren. Durch das Verfahren kann aufwendige Arbeit durch Mitarbeiter eingespart und eine sehr beschleunigte Bearbeitung sichergestellt werden. Durch zentralisierte Abspeicherung von Codes in Lieferanten ist es nun möglich, jederzeit neue Kombinationen entsprechend Kundenwünschen zu erstellen und entsprechende Abspielungen zu veranlassen.

Obwohl die Erfindung anhand bevorzugter Ausführungsbeispiels beschrieben wurde, ist dem Fachmann ersichtlich, dass dieselbe keineswegs auf die beschriebene Ausführungsform begrenzt ist, sondern vielfältige Abwandlungen im Rahmen der Ansprüche möglich sind.

## Patentansprüche

1. Verfahren zur zentralen Organisation der Vorstellung digitalisierter Werbefilme in Kinosälen, die zur Wiedergabe digitaler Werbefilme ausgerüstet sind, **gekennzeichnet durch**:
- Abspeichern von Zielgruppencodes zu Filmtiteln in einem Filmbewertungsdatenlieferanten (12);
- Erstellen von Medienwirksamkeitscodes, die einzelnen Zielgruppen zugeordnet werden, **durch** einen den Erfolg des Films berücksichtigenden Zielgruppendaten-Lieferanten (14);
- Abspeichern einer Gebührenordnung im Gebührenlieferanten (15);
- Übermitteln der so erstellten Codes und der Verknüpfungen mit Filmtiteln und an einen zentralen Werbeverteiler (10),
- Beauftragung von Werbung gemäss Zielgruppencodes, Werbefrequenzdaten und ggf. Budgetierungsdaten **durch** einen Kunden (16),
- Erstellen mindestens einer individuellen Playlist anhand der Informationen der Lieferanten und Codes **durch** den zentralen Werbeverteiler (10) für den Kunden (16);
- Übermitteln der Playlist an mindestens einen Kinosaal (18) und dementsprechendes Abspielen der Werbefilme;
- ggf. Übermitteln der abgespielten Playlists von den Kinosälen (18) an den zentralen Werbeverteiler (10) und Erstellen einer Gebührenrechnung anhand der gespielten Playlists für den Kunden (16).

2. Verfahren nach Anspruch 1, **dadurch gekennzeichnet, daß** auf dem Werbeverteiler (10) die digitalisierten Werbefilmsequenzen gespeichert sind.

3. Verfahren nach Anspruch 1 oder 2, **dadurch gekennzeichnet, daß** die Playlisten mittels digitaler Datenübertragung an einen in dem jeweiligen Filmtheater befindlichen Kinorechner übermittelt werden, der eine Widergabeeinheit, einen digitalen Videoprojektor, ein LCD-Display, ein LED-Display od. dgl. steuert.

4. Verfahren nach Anspruch 3, **dadurch gekennzeichnet, daß** die Werbefilmsequenzen mit digitaler Datenübertragung übermittelt werden.

5. Verfahren nach einem der vorherigen Ansprüche, **dadurch gekennzeichnet, daß** der Werbeverteiler (10) einer Abspieleinheit auf der Playlist enthaltene Werbefilmsequenzen übermittelt.

6. Verfahren nach einem der vorherigen Ansprüche, **dadurch gekennzeichnet, daß** die auf dem Werbeverteiler (10) gespeicherten Playlisten und/oder Werbefilmsequenzen an eine zentrale Sendestation übermittelt werden, welche die Daten an die einzelnen Kinosäle überträgt.

7. Verfahren nach einem der vorherigen Ansprüche, **dadurch gekennzeichnet, daß** die Datenübertragung via Satellit geschieht.

8. Verfahren nach einem der vorherigen Ansprüche, **dadurch gekennzeichnet, daß** die Daten kodiert übertragen werden.

9. Vorrichtung zur Durchführung des Verfahrens nach Anspruch 1,**gekennzeichnet durch**:
einen Filmbewertungsdatenlieferanten (12), der zu Filmtitein zugeordnete Zielgruppencodes beinhaltet;
einen Zielgruppenakzeptanzlieferanten (14), der Medienwirksamkeitscodes, die einzelnen Zielgruppen zugeordnet werden, entsprechend dem Erfolg eines Films in einer Datenbank mit Zuordnung zu Filmtiteln enthält;
einen Gebührenlieferanten (15), der eine Datenbank für Werbegebühren pro Zeit, Ort und Filmeigenschaften enthält,
einem zentralen Werbeverteiler (10), der ein Playlisterstellungsprogramm mit Abrechnungsroutine auf Basis von **durch** die Lieferanten gelieferten Codes in Verknüpfung mit Fümtiteln abarbeitet und die so erstellte Playlist, ggf. mit Kostenvoranschlag, dem Kunden und/oder dem Kino übermitteln kann;
wobei Lieferanten (12, 14, 15) und Kunden (16) mit dem Werbeverteiler (10) verbunden sind und der Werbeverteiler mit den Kinosälen (18) direkt oder über Kinorechner so verbunden ist, wobei die Verbindung zwischen Kunden und Werbeverteiler dialogfähig ist, wobei der Werbeverteiler (10) so mit dem mindestens einen Kinosaal (18) verbunden ist, dass er Playlists versenden und abgespielte Playlists zur Abrechnung zurückerhalten kann.
